# EUROPÄISCHE PATENTSCHRIFT

(11) **EP 0 475 169 B1**
(45) Veröffentlichungstag und Bekanntmachung des Hinweises auf die Patenterteilung: **17.04.1996**
(21) Anmeldenummer: 91114212.3
(22) Anmeldetag: 24.08.1991
(51) Int. Cl.: G01S 17/88

(54) **Laserstrahleinrichtung für Kraftfahrzeuge**
Laser beam device for vehicles
Dispositif de génération de faisceaux à laser pour véhicules

(30) Priorität: 11.09.1990 DE 4028788
(43) Veröffentlichungstag der Anmeldung: 18.03.1992
(73) Patentinhaber: Bayerische Motoren Werke Aktiengesellschaft, D-80788 München (DE)
(72) Erfinder: Jost, Michael, W-8044 Unterschleissheim (DE); Weishaupt, Walter, W-8000 München 60 (DE)

(56) Entgegenhaltungen:
- DE-A- 3 701 340
- GB-A- 2 139 445
- US-A- 4 158 841
- US-A- 4 802 096
- PATENT ABSTRACTS OF JAPAN Bnd. 6, Nr. 21 (P-152)(1095) 30. Oktober 1982 & JP-A-57 120 875 (SUTEO TSUTSUMI)

## Beschreibung

Die Erfindung bezieht sich auf eine Laserstrahleinrichtung nach dem Oberbegriff des Patentanspruchs 1.

Derartige Einrichtungen werden zur Abstandsbestimmung und auch zum Erkennen von Hindernissen überwiegend bei schlechten Sichtverhältnissen eingesetzt. Eine derartige Einrichtung ist beispielsweise aus GB-A-2 139 445 bekannt. Dabei besteht das Problem, einen möglichst großen Beobachtungsbereich abzudecken und gleichzeitig die in diesen Bereich eingestrahlte Energie möglichst gering zu halten. Letzteres resultiert einerseits aus gesetzlichen Anforderungen und andererseits aus dem beschränkten Leistungsvermögen handelsüblicher Laserstrahlquellen.

Der Erfindung liegt die Aufgabe zugrunde, eine Laserstrahleinrichtung der eingangs genannten Art zu schaffen, die den jeweiligen Beobachtungsbereich optimal abdeckt.

Die Erfindung löst diese Aufgabe durch die kennzeichnenden Merkmale des Patentanspruchs 1.

Grundlegend für die Erfindung ist die Überlegung, daß der Beobachtungsbereich von den Betriebsbedingungen des Kraftfahrzeugs abhängen soll. Bei einer Fahrt mit hoher Geschwindigkeit ist es erforderlich, möglichst weit vorauszusehen, während bei niedriger Geschwindigkeit die Beobachtung eines Bereichs sinnvoll und erforderlich ist, der wesentlich näher am Kraftfahrzeug liegt. Hinzu kommen bei Kurvenfahrten eine Richtungsänderung des Beobachtungsbereichs entsprechend dem Verlauf der Kurve sowie bei einem Betrieb des Kraftfahrzeugs unter schlechten Sichtbedingungen, wie Nebel, Regen und Schnee die Notwendigkeit, die vorgegebenen Strahlenergie optimal zu nutzen. Dies kann erreicht werden, indem der Querschnitt des Laserstrahls verringert wird. Abgesehen von dem trivialen, von der Leuchtweitenregelung her bekannten Fall eines Nickwinkelausgleichs abhängig von der Beladung kann die Änderung der Höhenlage des Laserstrahls neben der Geschwindigkeit auch entsprechend dem Fahrbahnverlauf vorgenommen werden. Ergibt sich aus der Auswertung der reflektierten Strahlung eine Änderung der Fahrbahnneigung, kann diese durch entsprechende Änderung der Laserstrahlneigung kompensiert werden. Das Beobachtungsfeld ist dann nur geschwindigkeitsabhängig und unabhängig vom Fahrbahnneigungsverlauf vom Kfz entfernt.

Eine Weiterbildung der Erfindung beschäftigt sich mit dem Problem, einen Laserstrahl zu verwenden, der mit möglichst geringer Strahlenergie arbeitet und einen möglichst großen Beobachtungsbereich abdeckt. Hier zeigt sich ein Laserstrahl als besonders vorteilhaft, wie er im Kennzeichen des Patentanspruchs 2 angegeben ist.

Dieser Laserstrahl besitzt eine Grundeinstellung, die für Fahrten mit relativ niedriger Geschwindigkeit, beispielsweise 50 km/h und ohne zusätzliche Besonderheiten, d.h. normale Beladung, keine Kurvenfahrt usw., maßgeblich ist. In dieser Grundeinstellung besitzt der Laserstrahl mit der angegebenen Gestalt gegenüber einem kreisförmigen oder in die Breite gezogenen Querschnitt eine Reihe von Vorteilen. Zum einen ist der Beobachtungsbereich, bezogen auf den Abstand vom Kraftfahrzeug, wesentlich größer als bei den vergleichbaren Strahlquerschnitten. Daraus resultiert der Vorteil, durch eine einfache Laufzeitbestimmung des reflektierten Signals eine genaue Aussage über die Entfernung und Lage eines Hindernisses treffen zu können. Die Information über die Lage des Hindernisses ergibt sich aus der ohnehin vorgegebenen Orientierung des Laserstrahls.

Für die Bestimmung und Erkennung von Hindernissen ergibt sich ein zusätzlicher Vorteil. Die Wahrscheinlichkeit, auf wegspiegelnde Flächen zu treffen und damit ein Hindernis nicht zu erkennen, wird infolge des großen Abstandbereiches für den beobachteten Raum sehr gering. Ein Zielverlust, d.h. das Nichterkennen anderer Objekte, beispielsweise von Kraftfahrzeugen, wird damit ausgeschlossen.

Die in der Breite relativ enge Begrenzung des beobachteten Raumes bietet den zusätzlichen Vorteil, eine Blendung nicht interessierender Objekte, beispielsweise entgegenkommender Fahrzeuge, zu verhindern.

Ausgestaltungen der Erfindung, die eine Reihe von Vorteilen aufweisen, sind in den weiteren Patentansprüchen angegeben. Die Vorteile der Erfindung liegen:
in der Optimierung der Strahlgeometrie mit der Besonderheit, für unterschiedliche Entfernungs- und Sichtbereiche mit zumindest nahezu identischem Strahlquerschnitt arbeiten zu können.
in der Verbreiterung des seitlichen Untersuchungsbereichs bei weiterhin geringem Strahlenergiebedarf
in einer Vergrößerung des Untersuchungsbereichs auch in Strahlrichtung gesehen
der Anpassung der zuletzt benannten Einrichtung an die jeweiligen Beobachtungsbereiche.

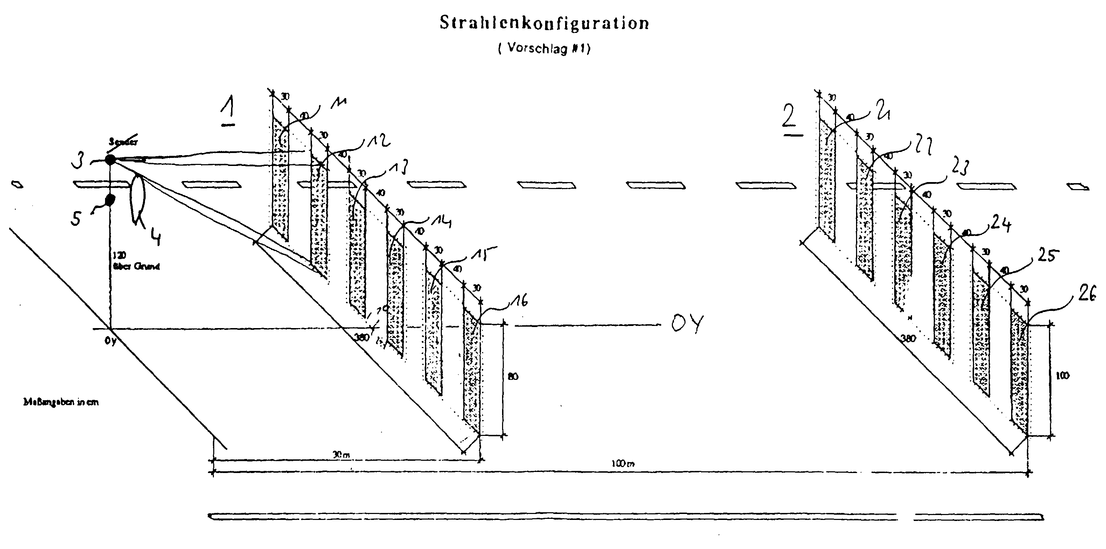

In der Zeichnung ist ein Ausführungsbeispiel der Erfindung dargestellt.

Die einzige Figur zeigt den prinzipiellen Aufbau einer erfindungsgemäßen Laserstrahleinrichtung in einer perspektivischen Ansicht. Die Laserstrahleinrichtung für Kraftfahrzeuge besteht aus zwei Bündeln 1 und 2 von jeweils sechs Laserstrahlen 11 bis 16 bzw. 21 bis 26. Die Laserstrahlen werden in einer nicht im einzelnen dargestellten Quelle 3 erzeugt. Über eine Optik 4 mit nachgeschaltetem selektiven Empfänger 5 werden die aus den jeweiligen Untersuchungsbereichen reflektierten Strahlen empfangen. Nicht im einzelnen dargestellt ist die Verbindung der reflektierten Signale mit einem Zeitzähler, der mit der Laserquelle 3 synchronisiert ist und der eine Bestimmung der Laufzeit des reflektierten Signals ermöglicht. Auf diese Weise kann der Abstand eines im jeweiligen Untersuchungsbereich liegenden Objekts bestimmt werden.

Jeder der Laserstrahlen 11 besitzt, bezogen auf seine Strahlrichtung einen in etwa rechteckigen Querschnitt mit um den Faktor 2 bis 3 größerer Höhe, bezogen auf die jeweilige Breite. Die Laserstrahlen 11 bis 16 und 21 bis 26 besitzen zumindest annähernd untereinander denselben Strahlquerschnitt. Damit ist es jeweils möglich, Untersuchungsbereiche zu bestrahlen, die eine wesentlich größere Ausdehnung in Längs- als in Querrichtung besitzen. Dabei liegen die Untersuchungsbereiche für die Laserstrahlen 11 bis 16 im Nahberelch und die der Laserstrahlen 21 bis 26 im Fernbereich des Kraftfahrzeugs. Der Nahbereich reicht dabei von 10 bis 80 Meter der Fernbereich von 80 bis 250. Die beiden Bereiche schließen etwa aneinander an, ohne sich zu überdecken.

Die Aufweitung des Laserstrahlenbündels 1 ist, bezogen auf den Abstand vom Sender 2, wesentlich größer als die des Bündels 2. Dadurch ergibt sich eine seitliche Ausdehnung des Untersuchungsbereichs, die größer als der Fahrzeugfahrkorridor ist. Dies ergibt insbesondere bei Kurvenfahrten die Möglichkeiten, den relevanten Bereich abzudecken und mögliche Ziele möglichst früh verfolgen zu können.

Zwischen den einzelnen Laserstrahlen ergeben sich Bereiche, die im statischen Fall nicht beobachtet werden können. Aufgrund der Eigenbewegung des Kraftfahrzeugs und/oder eines Beobachtungsobjektes gelangt dieses aber rechtzeitig in den Untersuchungsbereich eines der Laserstrahlen und kann dann erkannt werden. Auf diese Weise ist es möglich, einen relativ breiten Untersuchungsbereich mit Einzel-Laserstrahlen abzudecken, die für sich eine relativ geringe Breite besitzen. Andererseits ist der Untersuchungsbereich für jeden der Laserstrahlen, gemessen an seiner jeweiligen Breite, relativ groß. Auf diese Weise ist es möglich, insbesondere bei Verwendung mehrerer Laserstrahlen entsprechend dem Laserstrahl 11 bis 16 bzw. 21 bis 26 mit relativ geringer Strahlenergie einen möglichst großen Untersuchungsbereich zu bestrahlen und darin vorhandene Objekte rechtzeitig zu erkennen.

Diese Wirkung wird verstärkt bei Verwendung des zweiten Strahlenbündels, gebildet aus den Laserstrahlen 21 bis 26 sowie ggf. noch eines dritten, auf einen noch weiter vom Kraftfahrzeug entfernt gerichteten Strahlenbündel mit wiederum jeweils mehreren Einzellaserstrahlen.

Mit Hilfe der dargestellten Anordnung eines oder auch mehrerer Strahlenbündel 1 bzw. 2 ist es auch möglich, eine dynamische Stahlanordnung zu erzielen. Darunter ist eine veränderliche Strahlgeometrie bezogen auf die Fahrzeuggrundebene zu verstehen. Dies gilt sowohl in seitlicher als auch in vertikaler Richtung. Auch die Aufweitung des Strahlenbündels kann veränderlich gestaltet werden. Damit ist es möglich, die Strahlgeometrie den jeweiligen Gegebenheiten anzupassen. So kann zum Beispiel bei einer Kurvenfahrt das Strahlenbündel seitlich in die jeweilige Kurve gedreht werden. Bei einer Beladung kann ein Ausgleich des Strahlenbündels in der Höhe vorgenommen werden. Entsprechend gilt dies bei Fahrzeugbeschleunigungen in Längsrichtung bzw. Querrichtung. Auch hier kann ein Ausgleich des Strahlenbündels in der Höhe und in der Neigung bezogen auf die Fahrzeuggrundebene erfolgen.

Entsprechend kann die Strahlenordnung auch dem jeweiligen Fahrgeschehen angepaßt werden. Abhängig von der Geschwindigkeit kann beispielsweise der relevante Entfernungsbereich, der aus der unteren Begrenzung und der sich daraus ergebenden oberen Begrenzung jedes Laserstrahlenbündels ergibt, vergrößert werden. Dabei kann auch die untere Begrenzung in ihrem Abstand vom Kraftfahrzeug vergrößert werden. Umgekehrt ergibt sich bei geringer Geschwindigkeit ein besonderes Interesse für den Nahbereich ; die untere Begrenzung des Laserstrahls wird dann in relativ kurze Entfernung vom Kraftfahrzeug gebracht.

Bei schlechten Sichtverhältnissen, wie Nebel, Regen, Schnee werden die Laserstrahlen gebündelt, um eine größere Reichweite zu erzielen. Der dann höhere, durch Rückstreuung bedingte Energieverlust über die Entfernung wird durch die enggebündelten Strahlen höherer Leistungsdichte kompensiert. Es wird dann mehr Energie ins Fernfeld eingestrahlt.

Mit einer derartigen dynamischen Strahlanordnung ist es auch möglich, den vertikalen Fahrbahnverlauf zu ermitteln. Dabei treffen zwei Strahlen in unterschiedlicher Entfernung auf die Fahrbahnoberfläche, z.B. in einem Abstand von 20 oder 30 Meter vor dem Kraftfahrzeug. Die Straßenoberfläche wird als Ziel erfaßt. Aus den ermittelten Entfernungen und der Strahlgeometrie kann der Fahrbahnverlauf in der Hochachse berechnet werden. Durch mehr als zwei Strahlen kann der Fahrbahnverlauf entsprechend genau ermittelt werden und erforderliche Kompensationsmaßnahmen z.B. ein Höhenausgleich, vorbereitet und durchgeführt werden.

Konstruktiv kann eine dynamische Änderung der Strahlanordnung erreicht werden durch Kippen oder Verdrehen der Strahlquelle, Verschieben der In Regel aus Linsen bestehenden Optik, bezogen auf die Sende- und Empfängerelemente oder aber auch im Verschieben der Sende- und Empfängerelemente bezogen auf die jeweilige Optik realisiert werden.

Die Informationen für den jeweiligen Fahrbetriebszustand kann von geeigneten Gebern geliefert werden. Diese sind hinreichend bekannt und bedürfen keiner sonderlichen Erläuterung.

## Patentansprüche

1. Laserstrahleinrichtung für Kraftfahrzeuge, mit im Kraftfahrzeug angeordnet einer Strahlquelle und einem Detektor für die aus dem bestrahlten Raum außerhalb des Kraftfahrzeugs reflektierte Strahlung, dadurch gekennzeichnet, daß der Laserstrahl in seiner Höhenlage und/oder Breiteneinstellung an die Fahrbedingungen des Kraftfahrzeugs angepaßt ist, indem zwei Bündel jeweils mehrerer gleichartiger fächerförmig ausgesandter Laserstrahlen in einer zur Strahlrichtung senkrechten Projektionsfläche nebeneinander liegen und in Strahlrichtung gesehen übereinander und sich im bestrahlten Raum nicht überlappend ausgesandt sind und das in Strahlrichtung gesehen untere Bündel stärker als das obere Bündel aufgeweitet ist.

2. Laserstrahleinrichtung nach Anspruch 1, dadurch gekennzeichnet, daß die Laserstrahlen der Laserstrahlenbündel einen auf der Projektionsfläche auftretenden Querschnitt mit wesentlich größerer Höhe als Breite besitzen.

3. Laserstrahleinrichtung nach Anspruch 2, dadurch gekennzeichnet, daß die Laserstrahlen ein Verhältnis Höhe zu Breite des auf der Projektionsfläche auftretenden Querschnitts besitzen, das zwischen 2 und 3 liegt.

## Claims

1. A laser-beam device for a motor vehicle comprising a beam source in the vehicle and a detector for radiation reflected from the irradiated space outside the vehicle, characterised in that the height and/or width of the laser beam is adjusted to the vehicle driving conditions, in that two groups of similar laser beams transmitted in a fan shape are adjacent one another in an imaginary projected surface at right angles to the beam and are transmitted one over the other in the direction of the beam and have irradiated spaces which do not overlap, and the lower group in the direction of the beam fans out more widely than the upper group.

2. A laser-beam device according to claim 1, characterised in that the cross-section of each laser beam in the imaginary projected surface has a much greater height than width.

3. A laser-beam device according to claim 2, characterised in that the cross-section of each laser beam in the imaginary projected surface has a height to width ratio between 2 and 3.

## Revendications

1. Installation à faisceaux laser pour véhicules automobiles composée d'une source de faisceaux embarquée dans le véhicule et d'un détecteur pour le rayonnement réfléchi par l'espace extérieur au véhicule et recevant le rayonnement, caractérisée en ce que le faisceau laser est adapté par son réglage en hauteur et/ou en largeur aux conditions de circulation du véhicule en ce que deux groupes de faisceaux composés chaque fois de plusieurs rayons laser de même nature, émis en éventail, sont juxtaposés dans une surface de projection perpendiculaire à la direction des rayons et sont superposés dans la direction des rayons en étant émis de manière à ne pas se chevaucher dans l'espace recevant les rayons, et en ce que dans la direction des rayons, le groupe de faisceaux inférieurs est plus fortement ouvert que le groupe de faisceaux supérieurs.

2. Installation à faisceaux laser selon la revendication 1, caractérisée en ce que les faisceaux laser des groupes de faisceaux ont une section prise sur la surface de projection qui a une hauteur considérablement plus importante que la largeur.

3. Installation à faisceaux laser selon la revendication 2, caractérisée en ce que les faisceaux laser ont un rapport entre la hauteur et la largeur pour la section arrivant sur la surface de projection qui est comprise entre 2 et 3.
